# EUROPÄISCHE PATENTSCHRIFT

(11) **EP 2 358 645 B1**
(45) Veröffentlichungstag und Bekanntmachung des Hinweises auf die Patenterteilung: **29.05.2013**
(21) Anmeldenummer: 10771662.3
(22) Anmeldetag: 19.10.2010
(51) Int. Cl.: C03B 7/086

(54) **GLASSPEISEVORRICHTUNG UND EIN VERFAHREN ZUM BEWEGEN EINES PLUNGERS EINER GLASSPEISEVORRICHTUNG**
GLASS FEEDER DEVICE AND METHOD FOR MOVING A PLUNGER OF A GLASS FEEDER DEVICE
DISPOSITIF SERVANT À L'ALIMENTATION DU VERRE, ET PROCÉDÉ POUR LE DÉPLACEMENT D'UN PISTON-PLONGEUR D'UN DISPOSITIF SERVANT À L'ALIMENTATION DU VERRE

(30) Priorität: 12.11.2009 DE 102009052991
(43) Veröffentlichungstag der Anmeldung: 24.08.2011
(73) Patentinhaber: Zwiesel Kristallglas AG, 94227 Zwiesel (DE)
(72) Erfinder: RÖCK, Gerhard, 94227 Zwiesel (DE)
(74) Vertreter: Müller-Boré & Partner Patentanwälte
(86) Internationale Anmeldenummer: PCT/EP2010/006392
(87) Internationale Veröffentlichungsnummer: WO 2011/057704

(56) Entgegenhaltungen:
- EP-A2- 1 440 945
- DE-U1- 20 316 501
- US-A- 3 711 267

## Beschreibung

Die vorliegende Erfindung betrifft eine Glasspeisevorrichtung und ein Verfahren zum Bewegen eines Plungers einer Glasspeisevorrichtung.

Eine Glasspeisevorrichtung ist mit einer Auslauföffnung versehen, um geschmolzenes Glas abzugeben. Der Querschnitt der Auslauföffnung ist über einen sogenannten Plunger veränderbar, um den Glasstrom zu steuern. Der Plunger wird hierzu in einem Rohr geführt und hat an seinem Ende eine konische Gestalt, um durch Heben und Senken den Querschnitt der Auslauföffnung zu verändern.

Ein Beispiel einer derartigen Glasspeisevorrichtung ist in dem Gebrauchsmuster DE 82 34 918 U1 offenbart. In dieser Glasspeisevorrichtung wird ein Plunger über eine Rollspindel angetrieben, die wiederum durch einen Gleichstrommotor über ein Untersetzungsgetriebe und eine Kupplung angetrieben wird. Gebauchsmuster DE 203 16501 U1 offenbart einen steuerbare. Elektromotor zum Auf- und Abbewegen von Plungern in einer Glasspeisevorrichtung.

Bei einer anderen (nicht druckschriftlich belegten) Glasspeisevorrichtung ist ein konstant in einer Richtung drehender Rotationsantrieb (üblicherweise elektr. Drehstrommotor) einer Kurvenrolle vorgeschaltet. Die Kurvenrolle hebt und senkt über Hebelgestänge, entsprechend dem Profil der Rolle, den Plunger. Durch mechanische Verstellung der Hebelverhältinisse kann die Hubgröße und Hublage relativ zum Auslaufrohr verstellt werden. Üblicherweise ist auch die Phasenlage der Plungerbewegung zu nachgeschalteten Maschinen über ein Differentialgetriebe einstellbar.

Nachteilig bei dieser Antriebsanordnung ist natürlich der enorme mechanische Aufbau. Der damit verbundene Aufwand für Wartung und die Störanfälligkeit ist sehr groß. Auch der durch die Kurvenscheibe fest vorgegebene Bewegungszyklus des Plungers ist nachteilig.

Als weitere (nicht druckschriftlich belegte) Antriebstechnik ist ein hydraulisches System zu nennen. Auch hier wird über eine Kurvenscheibe der Sollwert vorgegeben. Über verschiedene Hebelgestänge kann dieser Sollwert noch verändert werden. Ähnlich wie in der bereits beschriebenen Anordnung kann auch hier Hubgröße, Hublage und Phasenlage eingestellt werden.

Bei anderen (nicht druckschriflich belegten) Systemen wurde die Sollwertvorgabe über die Kurvenrolle mit Hebelgestänge durch Servoventiltechnik ersetzt. Nachteilig bei der Hydrauliklösung ist der relativ große Aufbau und der hohe Energieaufwand des Hydraulikaggregates.

Die genannten motorischen Antriebssysteme erfordern aufgrund der Vielzahl von mechanischen Verschleißteilen einen hohen Wartungsaufwand und bezüglich Genauigkeit nur innerhalb bestimmter Grenzen.

Die Aufgabe der Erfindung besteht somit in der Schaffung einer neuartigen Glasspeisevorrichtung und eines korrespondierenden Verfahrens, die die Nachteile des Stands der Technik vermeiden und insbesondere bei geringem Wartungsaufwand einen Plunger sehr präzise steuern und bewegen können.

Diese Aufgabe wird durch die Merkmale der unabhängigen Ansprüche gelöst. Vorteilhafte Weiterbildungen sind Gegenstand der abhängigen Ansprüche.

Die Erfindung betrifft eine Glasspeisevorrichtung mit:
einem Plunger (Tauchkolben), der im wesentlichen durch Heben und Senken Glasschmelze zu einer Auslauföffnung eines Glasschmelzebehälters hin pumpen kann und/oder den Querschnitt der Auslauföffnung verändern kann,
einer feststehenden Spindel bzw. Gewindestange bzw. Rohr mit Aussengewinde, einer Mutter bzw. eines Innengewindebauteils, die/das sich im Gewindeeingriff mit der Spindel befindet, um sich durch Drehen entlang der Spindel zu bewegen, und einem Antriebsmotor zum Drehen der Mutter,
wobei die Mutter unmittelbar mit einem Rotor bzw. Läufer des Antriebsmotors und der Plunger mit einem Gehäuse des Antriebsmotors verbunden ist.

Somit wird die rotierende Bewegung des, vorzugsweise elektrischen, Antriebsmotors mit der Mutter der Spindel, vorzugsweise einer Kugelrollspindel, gekoppelt. Zwischen Antriebsmotor und Mutter ist kein Getriebe oder ein anderes verschleißbehaftetes, mechanisches Element notwendig. Die Mutter ist direkt mit dem Rotor des Motors verbunden und damit vollkommen spielfrei. Vorzugsweise ist der Antriebsmotor um einen Kugelgewindetrieb gebaut, bzw. der Kugelgewindetrieb ist in den Motor eingebettet.

Ein wesentlicher Vorteil dieser Anordnung ist natürlich auch die Baugröße des Systems. Bei den bekannten Systemen war es immer notwendig, die mechanischen Antriebselemente separat vom Motor zu lagern. Dadurch kommt es zwangsweise immer zu einer Überbestimmung der Einheiten, was durch Kupplungselemente ausgeglichen werden muss. Bei der neuen Glasspeisevorrichtung ist die Motorlagerung vorzugsweise zugleich auch Lagerung der mechanischen Antriebseinheit, d.h. der Mutter des Kugelgewindetriebs. Dadurch können keine Zwangskräfte entstehen.

Weiter bevorzugt ist das Gehäuse des Antriebsmotors über eine Hebeplatte mit dem Plunger verbunden. Die Hebeplatte kann direkt an das Gehäuse des Antriebsmotors montiert werden, um durch die lineare Bewegung des Antriebsmotors mit seinem Gehäuse mitgenommen zu werden. Darüber hinaus kann die Hebeplatte als Plungeraufnahme dienen bzw. eine Plungeraufnahme stützen.

Die Hebeplatte ist weiter bevorzugt über zumindest eine Linearführung in axialer Richtung der Spindel geführt. Diese Linearführung weist bevorzugt zumindest eine im wesentlichen vertikale Stange auf, die in der Hebeplatte bzw. in einer an der Hebeplatte montierten Buchse oder dergleichen geführt ist. Somit ist die Hebeplatte in der axialen Richtung der Spindel beweglich, während eine Rotation der Hebeplatte um die Spindel herum verhindert wird. Eine besonders bevorzugte Führung der Hebeplatte wird erzielt, wenn neben der Spindel ein Paar Stangen als Linearführung angeordnet ist.

Weiter bevorzugt ist der Plunger drehbar und/oder weist an seinem Umfang Rippen auf. Auf diese Weise kann eine Bewegung der Glasschmelze durch Drehen des Plungers gesteuert werden, wenn die Rippen schraub- oder spiralförmig ausgebildet sind.

Vorzugsweise ist die Glasschmelze über eine Speiseleitung zu dem Glasschmelzebehälter zuführbar und die Speiseleitung ist vorzugsweise oberhalb des Plungers angeordnet.

Vorzugsweise weist ein Stator des Antriebsmotors Kühlkanäle zum Hindurchleiten einer Kühlflüssigkeit, vorzugsweise Wasser, auf.

Vorzugsweise ist die Spindel durch den Antriebsmotor hindurch geführt. Auf diese Weise kann eine Lagerung des Rotors bzw. Motorläufers gleichzeitig als Lagerung der Mutter dienen. Der Antriebsmotor ist bei dieser bevorzugten Ausführung sozusagen um die Spindel herum gebaut. Um über die Glasschmelze in die Spindel eingebrachte Wärme abzuführen, ist diese vorzugsweise hohl ausgebildet, so dass Kühlwasser oder ein anderes Kühlmedium durch die Spindel hindurchgeleitet werden kann.

Vorzugsweise weist der Antriebsmotor einen Drehgeber für den zurückgelegten Drehwinkel insbesondere bezüglich einer Anfangsposition auf. Auf diese Weise kann der Antriebsmotor exakt gesteuert werden, um einen Hub des Plungers exakt einzustellen. Weiter bevorzugt wird eine Anhalteposition des Rotors im Antriebsmotor im geschlossen Regelkreis geregelt, um eine Präzision weiter zu erhöhen.

Bei herkömmlichen Servoanwendungen mit rotativen Meßsystemen ist der Geber üblicherweise auf der Rückseite des Antriebes angeflanscht. Daraus ergeben sich zwei Nachteile. Einerseits ist die Anordnung relativ ungenau, da zwischen Meßsystem und mechanischer Antriebseinheit (z.B. Kugelgewindetrieb) ein Getriebe angeordnet ist. Das in dem Getriebe erforderliche Spiel führt zu Ungenauigkeiten und verändert sich darüber hinaus während der Lebensdauer aufgrund von Verschleiß. Weiterhin kommt es zu einer Überbestimmung der Lagerung, da Geber und Motor separat gelagert sind.

Bei der bevorzugten Ausführungsform hingegen ist das Gebersystem direkt mit dem Rotor des Motors und der Mutter des Kugelgewindetriebs verbunden, um eine präzise Messung vorzusehen und eine Überbestimmung zu vermeiden.

Weiter bevorzugt ist der Antriebsmotor ein hochpoliger permanenterregter bürstenloser Gleichstrommotor, ein geschalteter Reluktanzmotor oder ein Asynchronmotor, der bis zu zweihundert Pole aufweist.

Weiter bevorzugt ist der Plunger an der Hebeplatte drehbar gelagert, um einen weiteren Freiheitsgrad bei der Steuerung des Plungers vorzusehen, so dass beispielsweise durch entsprechende Formgebung des Plungers der Querschnitt der Auslauföffnung durch Drehen des Plungers steuerbar oder regelbar ist.

Gemäß einem weiteren Gesichtspunkt wird ein Verfahren zum Bewegen eines Plungers einer Glasspeisevorrichtung mit folgenden Schritten zur Verfügung gestellt: Anordnen einer feststehenden Spindel,
Anordnen einer Mutter im Gewindeeingriff mit der Spindel, um sich durch Drehen entlang der Spindel zu bewegen,
Verbinden der Mutter mit einem Rotor eines Antriebsmotors zum Drehen der Mutter, und
Verbinden des Plungers mit einem Gehäuse des Antriebsmotors.

Vorzugsweise weist das Verfahren des weiteren folgende Schritte auf: Hindurchführen der Spindel durch den Antriebsmotor hindurch und/oder Kühlen der Spindel durch Ausbilden der Spindel als hohles Rohr und Hindurchleiten von Kühlwasser.

Weiter bevorzugt weist das Verfahren des weiteren folgende Schritte auf:

Messen des zurückgelegten Drehwinkels insbesondere bezüglich einer Anfangsposition und/oder Regeln einer Anhalteposition im geschlossen Regelkreis.

Die Erfindung wird nun anhand eines Ausführungsbeispiels im Zusammenhang mit den beigefügten Figuren näher erläutert.
Fig. 1 zeigt einen Längsschnitt durch den Antriebsmotor mit der durch den Antriebsmotor hindurchgeführten feststehenden Spindel gemäß dem Ausführungsbeispiel.
Fig. 2 zeigt eine Seitenansicht der Glasspeisevorrichtung gemäß dem Ausführungsbeispiel von Fig. 1.
Fig. 3 zeigt eine Draufsicht auf die Glasspeisevorrichtung von Fig. 2.
Fig. 4 zeigt eine Schnittzeichnung eines Glasschmelzebehälters mit einem Plunger.

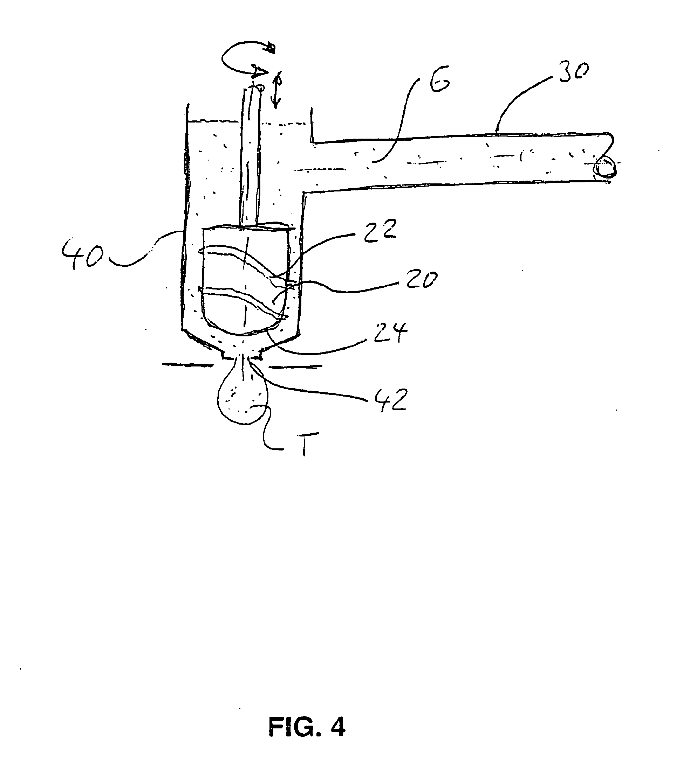

Wie in Fig. 4 gezeigt ist, ist ein Plunger 20 oder Tauchkolben in einem Glasschmelzebehälter 40 derart angeordnet, dass der Plunger 20 zumindest teilweise in Glasschmelze G eingetaucht ist. Die Glasschmelze G wird über eine Speiseleitung 30 zu dem Glasschmelzebehälter 40 zugeführt. Durch Auf- und Abbewegen des Plungers 20 wird die Glasschmelze G durch eine Auslauföffnung 42 aus dem Glasschmelzebehälter 40 hinausgepumpt.

Alternativ oder zusätzlich kann eine Vorderseite 24 des Plungers 20 den Querschnitt der Auslauföffnung 42 verändern, um hierdurch einen Glasschmelzestrom zu steuern oder zu regeln.

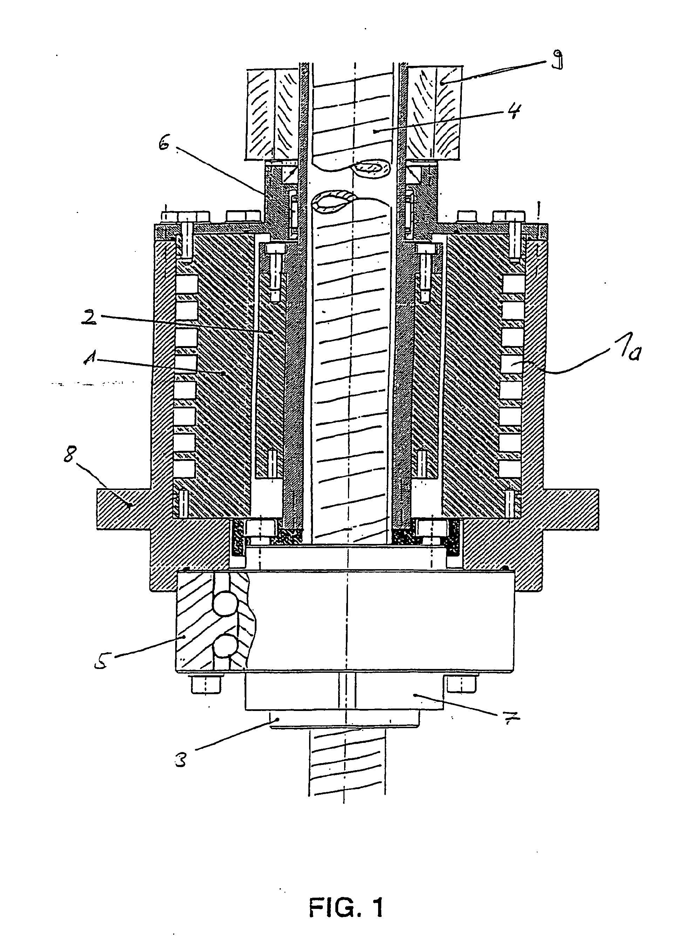

Fig.1 zeigt eine erfindungsgemäße Ausführungsform des Antriebsmotors einer Glasspeisevorrichtung für Glasmaschinen zum Heben und Senken des Plungers 20 mittels Direktantrieb. Der Stator 1 des elektrischen Motors ist mit einem Motorgehäuse 8 fest verbunden. Ein Rotor 2 des elektrischen Motors ist fest mit einer Mutter 3 eines Kugelgewindetriebes verbunden. Dreht sich der Rotor 2, dreht sich auch die Mutter 3. Indem eine Spindel 4 des Kugelgewindetriebes fest eingespannt ist, hebt oder senkt sich die komplette Baugruppe, je nach Drehrichtung des Rotors 2. Neben dem hier genannten Kugelgewindetrieb kann auch jede andere Gewindeart angewandt werden, wie beispielsweise ein Spitz- oder ein Trapezgewinde.

Somit wird eine Drehung des Rotors 2 in eine lineare Bewegung des Motors entlang der Spindel umgesetzt. Eine sehr präzise Steuerung der Linearbewegung kann dadurch erzielt werden, dass der Rotor 2 bezüglich seiner Winkelstellung innerhalb des Motors sehr präzise gesteuert werden kann. In anderen Worten kann eine Anhalteposition des Rotors 2 im Bereich von bis zu einer Winkelsekunde bestimmt werden.

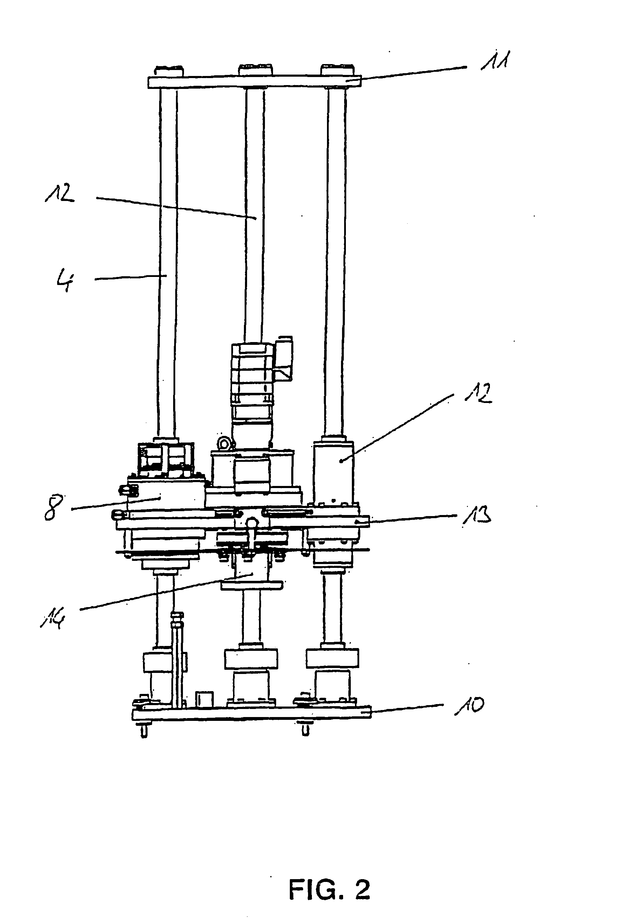

Die resultierende Umfangskraft am Stator 1 wird durch ein Motorgehäuse 8 aufgefangen, das wiederum nicht drehbar angeordnet ist. Dies geschieht vorzugsweise durch lineare Führungselemente 12, 12, die parallel zur Spindelachse angeordnet sind, wie in Fig. 2 gezeigt. Dabei sind die linearen Führungselemente 12, 12 sowie die Spindel 4 vorzugsweise zwischen einer Grundplatte 10 und einer Kopfplatte 11 fixiert.

Eine Hebe- oder Mittelplatte 13 ist zwischen den Platten 10, 11 entlang den Führungselementen 12, 12 und entlang der Spindel 4 verschieb- bzw. verlagerbar. Sowohl das Motorgehäuse 8 als auch eine Plungeraufnahme 14 sind an dieser Hebeplatte 13 fix montiert, um sich gemeinsam im wesentlichen in der vertikalen Richtung zu bewegen.

Der Rotor 2 ist in dem Antriebsmotor vorzugsweise über ein sogenanntes Festlager 5 und ein sogenanntes Loslager 6 drehbar gelagert. Durch das Festlager 5 werden sowohl die Kräfte in Axial- als auch in Radialrichtung aufgenommen. Das Loslager 6 nimmt dagegen nur die Kräfte in radialer Richtung auf. Auf diese Weise können Fertigungstoleranzen und Wärmedehnungen in axialer Richtung des Antriebsmotors bzw. des Rotors 2 ausgeglichen werden.

Ein Innenring des Festlagers 5 ist vorzugsweise mittels einer Nutmutter 7 an der Mutter 3 des Kugelgewindetriebes befestigt. Ein Außenring des Festlagers 5 ist fest mit dem Motorgehäuse 8 verbunden. Die gewählte Anordnung der Lager 5, 6 gewährleistet somit einerseits die Aufnahme aller Kräfte durch den Kugelgewindetrieb, aber auch die einwandfreie Lagerung von Stator 1 und Rotor 2 des Antriebesmotors.

Ein Meßsystem 9 zum Messen der Winkeldrehung des Rotors 2 ist ebenfalls direkt, d.h. ohne mechanische Verschleißteile oder spielbehaftete Teile, mit dem Rotor 2 und der Mutter 3 verbunden.

Fig.2 zeigt eine mögliche Anordnung einer in Fig. 1 beschriebenen Antriebseinheit in einer Glasspeisevorrichtung für Glasmaschinen zum Heben und Senken eines Plungers. Hierbei ist die in Fig.1 beschriebene Antriebseinheit in ein Säulengestell bestehend aus zwei Linearführungssystemen 12 und der Grundplatte 10 und der Kopfplatte 11 eingebettet. Die Spindel 4 der Antriebseinheit ist fest mit der Grundplatte 10 und der Kopfplatte 11 verbunden und kann somit keine Rotation ausführen. Das Motorgehäuse 8 ist fest mit der Mittelplatte 13 verbunden. Die Mittelplatte 13 ist über das Linearführungssystem 12 in Plungerbewegungsrichtung beweglich gelagert.

Somit erfolgt die notwendige Auffangung der Kräfte auf den Stator 1 bei Drehung des Rotors 2. Sobald sich also der Rotor 2 dreht, verfährt die Mittelplatte 13, mit allem was darauf befestigt ist, je nach Drehrichtung im wesentlichen auf oder ab. Die Plungeraufnahme 14 ist mit der Mittelplatte 13 in axialer Richtung fest verbunden. Die Plungeraufnahme kann jedoch in der Mittelplatte 13 drehbar gelagert sein, so dass der Plunger zusätzlich eine Rotation ausüben kann.

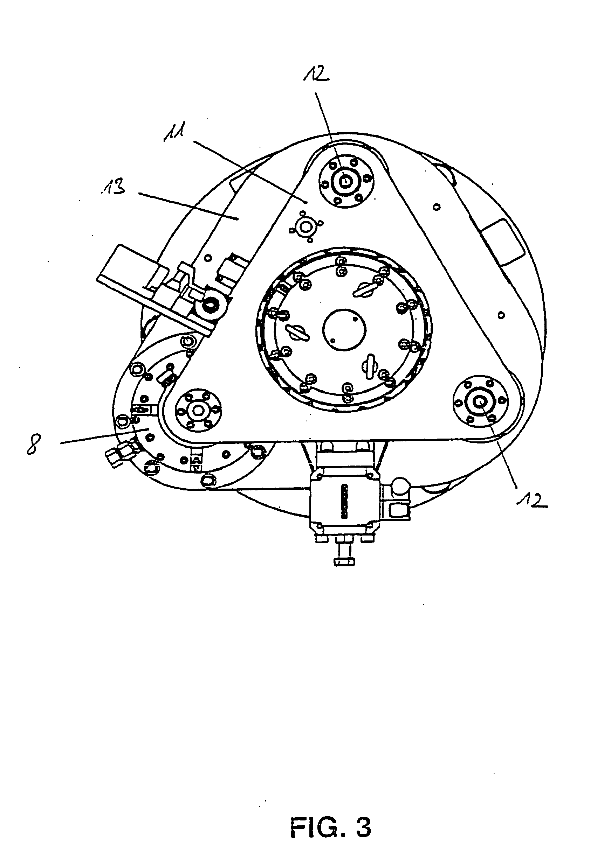

Fig. 3 zeigt die Glasspeisevorrichtung von Fig. 2 in der Draufsicht. Bei diesem Ausführungsbeispiel umfasst die Glasspeisevorrichtung zwei Linearführungselemente 12, 12 und die Spindel 4, welche in Winkelrichtung vorzugsweise im wesentlichen um 120° beabstandet sind. Es versteht sich jedoch, dass auch nur ein einzelnes Linearführungselement 12 angeordnet sein kann. Des weiteren kann auf ein Linearführungselement vollkommen verzichtet werden, wenn die Linearführung nur über die Spindel 4 erfolgt und die Drehung des Motorgehäuses 8 über ein anderes (nicht gezeigtes) Drehverhinderungselement verhindert wird, um das Drehmoment des Rotors aufzufangen.

Somit betrifft die Erfindung vorzugsweise eine Glasspeisevorrichtung für Glasmaschinen zum Heben und Senken eines Plungers mit einem elektrischen Motor aufweisend einen Rotor und einen Stator, eine Kugelgewindespindel, eine Kugelgewindemutter, ein Motorgehäuse, und eine auf einer gemeinsamen Säulenführungseinheit angebrachte Antriebslagerung, die im wesentlichen parallel zur Achse der Bewegungsrichtung des Plungers angeordnet ist, um die Reaktion der umlaufenden Bewegung der Mutter auffangen zu können, wobei die Mutter des Kugelgewindetriebes direkt, d.h. ohne Getriebe oder ein anderes mechanisches, spielbehaftetes Element, mit dem Rotor des elektrischen Motors (vorzugsweise Servomotor bzw. Torquemotor) verbunden ist und dadurch der Plunger auf und ab bewegt wird.

Vorzugsweise ist die Lagerung des Rotors zugleich Lagerung der Mutter des Kugelgewindetriebes, so dass keine Zwangskräfte auftreten können.

Vorzugsweise ist das Gebersystem unmittelbar mit dem Rotor und der Mutter des Kugelgewindetriebes verbunden, so dass eine hohe Präzision des Messsystems erzielt wird und keine Zwangskräfte innerhalb des Systems auftreten.

Vorzugsweise ist die wassergekühlte Spindel durch den Motor hindurch geführt, so dass der Motor von innen wassergekühlt ist.

Obwohl der hier gezeigte Rotor bzw. Läufer innerhalb des Stators angeordnet ist, kann auch umgekehrt der Stator innerhalb des Rotors angeordnet sein. In anderen Worten, obwohl der hier gezeigte Rotor als sogenannter Innenläufer ausgebildet ist, kann der Rotor auch als sogenannter Außenläufer ausgebildet sein.

### Bezugszeichenliste

| | |
|---|---|
| 1 | Stator |
| 1a | Kühlkanal |
| 2 | Rotor |
| 3 | Mutter |
| 4 | Spindel |
| 5 | Festlager |
| 6 | Loslager |
| 7 | Nutmutter |
| 8 | Gehäuse |
| 9 | Meßsystem |
| 10 | Grundplatte |
| 11 | Kopfplatte |
| 12 | Linearführungssystem |
| 13 | Mittel- bzw. Hebeplatte |
| 14 | Plungeraufnahme |
| 20 | Plunger |
| 22 | Rippe |
| 24 | Vorderende |
| 30 | Speiseleitung |
| 40 | Glasschmelzebehälter |
| 42 | Auslauföffnung |
| G | Glasschmelze |
| T | Glastropfen |

## Patentansprüche

1. Glasspeisevorrichtung mit:
einem Plunger (20), der im wesentlichen durch Heben und Senken Glasschmelze (G) zu einer Auslauföffnung (42) eines Glasschmelzebehälters (40) hin pumpen kann und/oder den Querschnitt der Auslauföffnung (42) verändern kann,
einer feststehenden Spindel (4),
einer Mutter (3), die sich im Gewindeeingriff mit der Spindel (4) befindet, um sich durch Drehen entlang der Spindel (4) zu bewegen, und
einem Antriebsmotor zum Drehen der Mutter (3),
wobei die Mutter (3) unmittelbar mit einem Rotor (2) des Antriebsmotors und der Plunger mit einem Gehäuse (8) des Antriebsmotors verbunden ist.

2. Glasspeisevorrichtung nach Anspruch 1, wobei der Plunger (20) drehbar ist und vorzugsweise an seinem Umfang Rippen (22) aufweist.

3. Glasspeisevorrichtung nach einem oder mehreren der vorherigen Ansprüche,wobei Glasschmelze (G) über eine Speiseleitung (30) zu dem Glasschmelzebehälter (40) zuführbar ist und die Speiseleitung vorzugsweise oberhalb des Plungers (20) angeordnet ist.

4. Glasspeisevorrichtung nach einem oder mehreren der vorherigen Ansprüche, wobei die Spindel (4) durch den Antriebsmotor hindurch geführt ist und/oder wassergekühlt ist, so dass der Antriebsmotor von innen gekühlt wird.

5. Glasspeisevorrichtung nach einem oder mehreren der vorherigen Ansprüche, wobei der Rotor (2) unmittelbar mit einem Drehgeber (9) für den zurückgelegten Drehwinkel verbunden ist, so dass eine stetige Regelung der Vertikalbewegung des Plungers (20) nach einer vorgegebenen oder vorgebbaren Sollkurve ermöglicht wird.

6. Glasspeisevorrichtung nach einem oder mehreren der vorherigen Ansprüche, wobei der Antriebsmotor ein hochpoliger permanenterregter bürstenloser Gleichstrommotor, ein geschalteter Reluktanzmotor oder ein Asynchronmotor ist, der bis zu zweihundert Pole aufweist.

7. Glasspeisevorrichtung nach einem oder mehreren der vorherigen Ansprüche, wobei ein Stator (1) des Antriebsmotors Kühlkanäle (1 a) zum Hindurchleiten einer Kühlflüssigkeit, vorzugsweise Wasser, aufweist.

8. Glasspeisevorrichtung nach einem oder mehreren der vorherigen Ansprüche, wobei die Lagerung des Rotors (2) zugleich Lagerung der Mutter des Kugelgewinde ist.

9. Verfahren zum Bewegen eines Plungers einer Glasspeisevorrichtung mit den Schritten:
Anordnen einer feststehenden Spindel (4),
Anordnen einer Mutter (3) im Gewindeeingriff mit der Spindel (4), um sich durch Drehen entlang der Spindel (4) zu bewegen,
Verbinden der Mutter (3) mit einem Rotor (2) eines Antriebsmotors zum Drehen der Mutter (3), und
Verbinden des Plungers (20) mit einem Gehäuse (8) des Antriebsmotors.

10. Verfahren zum Bewegen eines Plungers einer Glasspeisevorrichtung nach Anspruch 9, des weiteren mit den Schritten: Hindurchführen der Spindel (4) durch den Antriebsmotor hindurch und/oder Kühlen der Spindel (4) durch Ausbilden der Spindel (4) als hohles Rohr und Hindurchleiten von Kühlwasser.

11. Verfahren zum Bewegen eines Plungers einer Glasspeisevorrichtung nach Anspruch 9 oder 10, des weiteren mit den Schritten:
stetige Regelung der Vertikalbewegung des Plungers (20) nach einer vorgegebenen oder vorgebbaren Sollkurve unter ständigem Messen des zurückgelegten Drehwinkels.

## Claims

1. A glass feeder device comprising:
a plunger (20) that can pump molten glass (G) to a discharge opening (42) of a molten glass container (40) basically by rising and falling, and/or can change the cross-section of the discharge opening (42),
a fixed spindle (4),
a nut (3) that engages the thread of the spindle (4) in order to move along the spindle (4) by rotating, and
a drive motor for rotating the nut (3),
wherein the nut (3) is directly connected to a rotor (2) of the drive motor and the plunger is connected to a housing (8) of the drive motor.

2. The glass feeder device according to claim 1, wherein the plunger (20) is rotatable and preferably has ribs (22) on its perimeter.

3. The glass feeder device according to one or more of the preceding claims, wherein molten glass (G) can be fed via a feedline (30) to the molten glass container (40), and the feedline is preferably arranged above the plunger (20).

4. The glass feeder device according to one or more of the preceding claims, wherein the spindle (4) is guided through the drive motor and/or is water-cooled so that the drive motor is cooled from the inside.

5. The glass feeder device according to one or more of the preceding claims, wherein the rotor (2) is directly connected to a rotary encoder (9) for the traveled rotary angle to enable continuous regulation of the vertical movement of the plunger (20) according to a set or settable target curve.

6. The glass feeder device according to one or more of the preceding claims, wherein the drive motor is a multipoled, permanently excited, brushless DC motor, a switched reluctance motor or an asynchronous motor that has up to 200 poles.

7. The glass feeder device according to one or more of the preceding claims, wherein a stator (1) of the drive motor has cooling channels (1a) for conducting a cooling fluid, preferably water.

8. The glass feeder device according to one or more of the preceding claims, wherein the bearing of the rotor (2) simultaneously bears the nut of the ballscrew

9. A method for moving a plunger of a glass feeder device comprising the steps:
arrangement of a fixed spindle (4),
arrangement of a nut (3) engaging the thread of the spindle (4) in order to move along the spindle (4) by rotation,
connection of the nut (3) to a rotor (2) of a drive motor to rotate the nut (3), and
connection of the plunger (20) to a housing (8) of the drive motor.

10. The method to move a plunger of a glass feeder device according to claim 9, further comprising the steps: guiding the spindle (4) through the drive motor and/or cooling the spindle (4) by forming the spindle (4) as a hollow tube an channeling cooling water through it.

11. The method to move a plunger of a glass feeder device according to claim 9 or 10, further comprising the steps:
continuously regulating the vertical movement of the plunger (20) according to a set or settable target curve while continuously measuring the traveled rotary angle.

## Revendications

1. Dispositif servant à l'alimentation du verre comprenant :
un piston-plongeur (20) qui peut pomper essentiellement par élévation et abaissement du bain de verre (G) vers un orifice de décharge (42) d'un récipient de bain de verre (40), et/ou peut modifier la section transversale de l'orifice de décharge (42),
une broche stationnaire (4),
un écrou (3) qui se trouve en prise filetée avec la broche (4) pour se déplacer par rotation le long de la broche (4), et
un moteur de commande pour pivoter l'écrou (3),
l'écrou (3) étant relié directement à un rotor (2) du moteur de commande et le piston-plongeur à un boîtier (8) du moteur de commande.

2. Dispositif servant à l'alimentation du verre selon la revendication 1, le piston-plongeur (20) étant rotatif et présentant des nervures (22) de préférence sur sa circonférence.

3. Dispositif servant à l'alimentation du verre selon une ou plusieurs des revendications précédentes, dans lequel le bain de verre (G) peut être amené via une conduite d'alimentation (30) vers le récipient de bain de verre (40) et la conduite d'alimentation est disposée de préférence au-dessus du piston-plongeur (20).

4. Dispositif servant à l'alimentation du verre selon une ou plusieurs des revendications précédentes, dans lequel la broche (4) est guidée à travers le moteur de commande et/ou est refroidie à l'eau de sorte que le moteur de commande est refroidi de l'intérieur.

5. Dispositif servant à l'alimentation du verre selon une ou plusieurs des revendications précédentes, dans lequel le rotor (2) est relié directement à un encodeur (9) pour l'angle de rotation parcouru, de sorte qu'une régulation constante du mouvement vertical du piston-plongeur (20) est possible selon une courbe théorique déterminée ou pouvant être déterminée.

6. Dispositif servant à l'alimentation du verre selon une ou plusieurs des revendications précédentes, dans lequel le moteur de commande est un moteur à courant continu sans balais excité en permanence sous forme multipôles, un moteur à réluctance commuté ou un moteur asynchrone qui comprend jusqu'à deux cent pôles.

7. Dispositif servant à l'alimentation du verre selon une ou plusieurs des revendications précédentes, dans lequel un stator (1) du moteur de commande comporte des canaux de refroidissement (1a) pour le passage d'un liquide de refroidissement, de préférence de l'eau.

8. Dispositif servant à l'alimentation du verre selon une ou plusieurs des revendications précédentes, dans lequel le logement du rotor (2) est simultanément le logement de l'écrou de la vis d'entraînement à billes.

9. Procédé pour le déplacement d'un piston-plongeur d'un dispositif servant à l'alimentation du verre comprenant les étapes suivantes :
agencement d'une broche stationnaire (4),
agencement d'un écrou (3) en prise filetée avec la broche (4) pour se déplacer par rotation le long de la broche (4),
liaison de l'écrou (3) à un rotor (2) d'un moteur de commande pour la rotation de l'écrou (3), et
liaison du piston-plongeur (20) à un boîtier (8) du moteur de commande.

10. Procédé pour le déplacement d'un piston-plongeur d'un dispositif servant à l'alimentation du verre selon la revendication 9, comprenant en outre les étapes suivantes : guidage de la broche (4) à travers le moteur de commande et/ou refroidissement de la broche (4) par la présentation de la broche (4) sous forme de tube creux et passage d'eau de refroidissement.

11. Procédé pour le déplacement d'un piston-plongeur d'un dispositif servant à l'alimentation du verre selon les revendications 9 ou 10, comprenant en outre les étapes suivantes :
régulation constante du mouvement vertical du piston-plongeur (20) selon une courbe théorique déterminée ou pouvant être déterminée en mesurant constamment l'angle de rotation parcouru.
